# FASCICULE DE BREVET EUROPEEN

(11) **EP 0 896 886 B1**
(45) Date de publication et mention de la délivrance du brevet: **16.04.2003**
(21) Numéro de dépôt: 98112982.8
(22) Date de dépôt: 13.07.1998
(51) Int. Cl.: B60B 1/04, B60B 21/06

(54) **Rayon pour roue de cycle, roue de cycle et procédés de fabrication**
Speiche eines Fahrradrades, Fahrradrad und Herstellungverfahren
Spoke for bicycle wheel, bicycle wheel and production method

(30) Priorité: 13.08.1997 FR 9710462
(43) Date de publication de la demande: 17.02.1999
(73) Titulaire: MAVIC S.A., 01990 Saint-Trivier sur Moignans (FR)
(72) Inventeur: Lacombe, Jean-Pierre, 74150 Marcellaz Albanais (FR); Mercat, Jean-Pierre, 01990 Saint Trivier sur Moignans (FR)
(74) Mandataire: Lejeune, Benoit

(56) Documents cités:
- DE-A- 4 306 592
- DE-C- 37 321
- DE-C- 648 429
- FR-A- 2 526 374
- US-A- 5 494 337

## Description

L'invention concerne un rayon métallique de type defini par le préambule de la revendication 13.

L'invention concerne également un procédé de fabrication d'un rayon pour roue de cycle. L'invention concerne également une roue de cycle comprenant des rayons réalisés par ce procédé.

Les rayons métalliques actuellement sur le marché sont réalisés en acier inoxydable ou acier zingué. De tels rayons présentent un corps de rayon allongé, avec une tête à l'une des extrémités. Pour les rayons de type droit, la tête est dans le prolongement direct du corps effilé. L'autre extrémité du rayon est filetée, et elle est prévue pour être engagée dans un écrou de rayon.

Une des propriétés mécaniques principales d'un rayon est sa résistance élastique et sa rigidité en traction. Une autre caractéristique est sa résistance à la fatigue. Ensuite, on peut mentionner le poids qui influe sur l'inertie de la roue, et la pénétration dans l'air.

Pour améliorer la résistance élastique du rayon, il est courant d'utiliser un acier inoxydable à l'état écroui. Ceci présente toutefois l'inconvénient que la mise en forme de rayon ne se fait pas dans de bonnes conditions. Cette mise en forme consiste à réaliser la tête, et le cas échéant à aplatir le filament pour améliorer sa pénétration dans l'air. En effet, du fait de l'écrouissage on ne peut réaliser que des têtes de petites dimensions, qui ont donc une portée réduite. Ceci induit des zones de contraintes très élevées dans les zones d'accrochage notamment sur le moyeu. En outre, leur résistance à la fatigue n'est pas très bonne à cause de micro-fissures qui peuvent survenir lors de la mise en forme du rayon.

Un autre inconvénient des rayons actuels est que l'écrou de rayon qui sert à l'accrochage du rayon du côté de la jante est une pièce indépendante. Ainsi, le montage d'un rayon nécessite la manipulation de deux pièces distinctes qu'il faut présenter sur la jante de deux côtés différents.

Le brevet DE 37 321 qui sert de base pour la présentation en deux parties de la revendication 13, décrit un rayon formé par un fil d'acier dont les deux extrémités sont façonnées comme des têtes de retenue de deux vis évidées qui sont engagées en rotation libre sur la partie longiligne du rayon. Comme cela a été évoqué juste avant, le façonnage d'un tel rayon génère des contraintes résiduelles élevées et des micro-fissures qui altèrent sa résistance à la fatigue. En outre au serrage des vis il est difficile de maîtriser la contrainte de torsion générée dans le corps du rayon.

Un but de l'invention est de proposer un rayon dont la mise en forme est plus facile.

Notamment, un but de l'invention est de permettre de réaliser des rayons présentant des têtes de volume plus important.

Un autre but de l'invention est de proposer un rayon qui présente des propriétés mécaniques améliorées de résistance élastique et de résistance à la fatigue.

Un autre but de l'invention est de proposer un rayon qui facilite les opérations de montage de la roue.

Ces buts et d'autres avantages qui apparaîtront dans la description qui va suivre sont atteints par le procédé de fabrication d'un rayon tel qu'il est défini dans la revendication 1 en annexe.

La roue selon l'invention est définie par la revendication 12.

Un rayon sous une forme particulière de réalisation est défini dans la revendication 13.

L'invention sera mieux comprise en se référant à la description ci-dessous et aux dessins en annexe qui en font partie intégrante.
La figure 1 montre un rayon réalisé par le procédé décrit dans la revendication 1.
La figure 2 montre en vue de côté un rayon selon une variante de mise en oeuvre de l'invention.
La figure 3 est une vue en coupe transversale du rayon de la figure 2 selon le plan A-A.
La figure 4 montre de façon schématique le rayon de la figure 1 accroché à une jante et un moyeu arrière, selon un mode non limitatif de mise en oeuvre de l'invention.
La figure 5 montre de la même façon le rayon de la figure 1 accroché à une jante et un moyeu avant, selon un mode non limitatif de mise en oeuvre de l'invention.
La figure 6 représente un rayon selon un autre mode de mise en oeuvre de l'invention.
La figure 7 illustre une variante de la vis évidée.

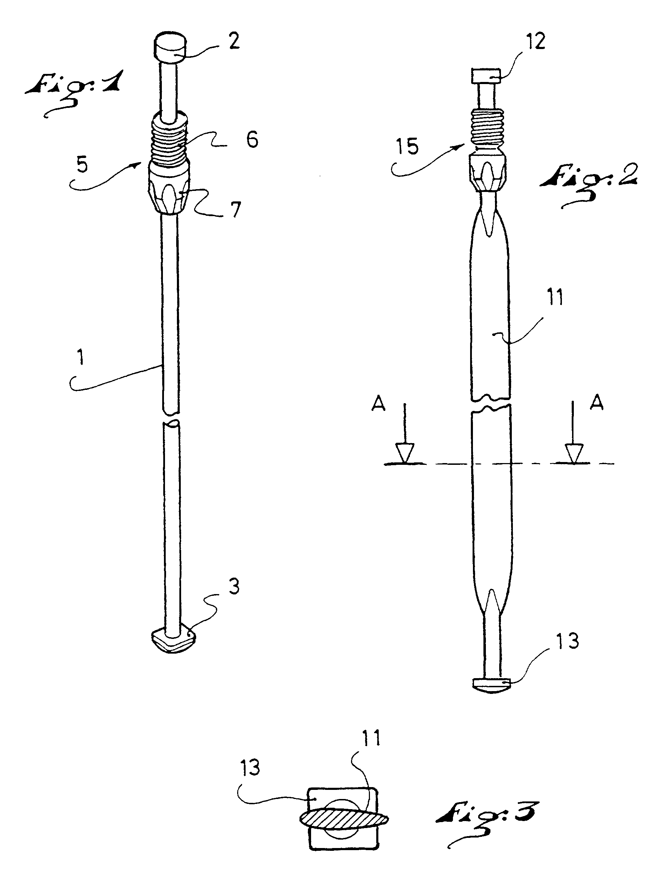

Le rayon représenté en figure 1 présente un corps 1 effilé dont la section est circulaire et sensiblement constante sur toute la longueur.

A chacune des extrémités, le corps présente une tête élargie, respectivement 2 et 3.

De préférence, et tel que cela est représenté, la tête 2 prévue pour être située du côté de la jante présente une section cylindrique ou approximativement cylindrique, compte tenu de son mode de mise en forme.

La tête 3 située du côté du moyeu présente de préférence une section non cylindrique, par exemple une forme de pyramide aplatie à base carrée. La forme de la section est déterminée pour empêcher la rotation de la tête au moment de la mise sous tension du rayon.

Un embout évidé d'accrochage est formé par une vis évidée 5 prévue pour l'accrochage du rayon du côté de la jante et sa mise sous tension. La vis 5 est montée coulissante et pivotante le long du corps 1. Elle comprend une partie filetée 6 qui est prévue pour coopérer avec un orifice taraudé de la jante, et, en retrait, une tête de vis représentée par une partie 7 nervurée qui est prévue pour être accouplée à un outil approprié. La vis est traversée d'un évidement cylindrique de révolution dont le diamètre est égal au diamètre du corps, au jeu de fonctionnement près. La vis 5 est prévue pour venir en butée contre la tête 2, et pour pivoter par rapport à cette tête, de façon à provoquer la mise sous tension progressive du rayon entre un moyeu et une jante.

La partie filetée de la vis est située du côté de la tête cylindrique 2. Le diamètre de la tête 2 est au plus égal au diamètre de la partie filetée 6 en fond de filet, afin de permettre la translation de la tête 2 dans l'orifice taraudé prévu pour la vis 5. Il faut noter que le moyen d'assemblage est ici la partie filetée d'une vis enfilée sur le corps effilé du rayon. Le diamètre du filetage est nettement plus élevé que celui d'un filetage réalisé directement sur le corps effilé du rayon. On a donc une concentration plus faible des efforts entre la vis et la jante.

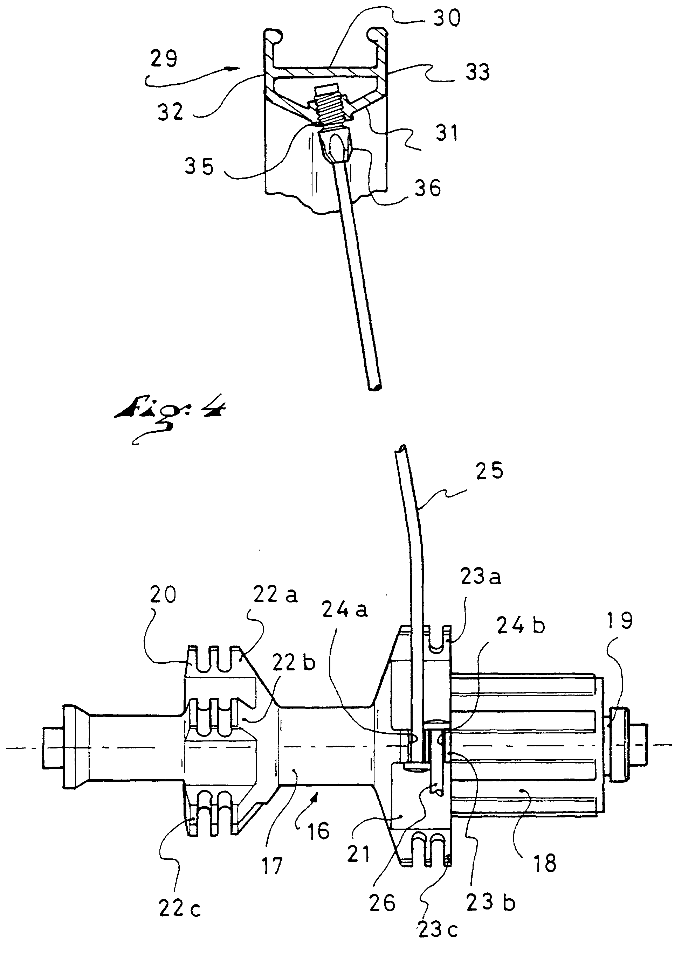

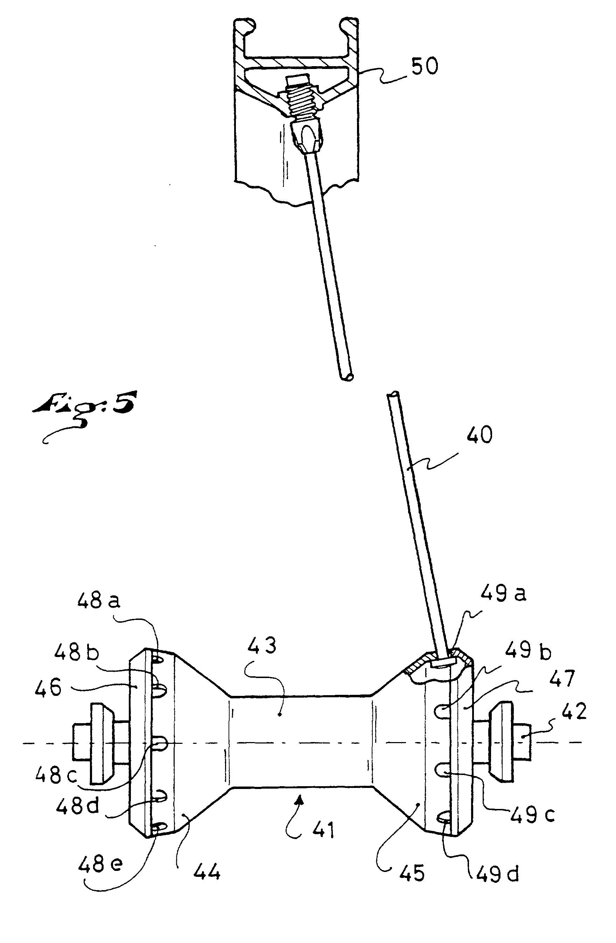

La figure 2 représente une variante de réalisation. Selon cette variante, la partie longiligne 11 du corps présente sur une grande partie de sa longueur une forme profilée. Par exemple, cette forme, visible dans la figure 3, est un profil de préférence aérodynamique, comme une goutte d'eau ou une aile d'avion. Comme cela apparaîtra ultérieurement, la partie longiligne 11 peut présenter en section une forme quasiment quelconque, symétrique ou non. Par exemple, on pourrait avoir un profil en aile d'avion incurvé de façon différente selon que le rayon est prévu pour se trouver du côté droit ou gauche de la roue. La section de la partie longiligne 11 peut aussi varier de façon évolutive sur sa longueur, en fonction de la distance du moyeu et de la jante.

A proximité de la tête cylindrique 12, la section de la partie longiligne évolue vers une forme circulaire qu'elle présente sur une longueur suffisante pour le montage et la libre rotation de la vis évidée 15. Cette vis est semblable à la vis 5 précédente. Comme dans le cas précédent, elle est prévu pour venir en butée contre la tête 12.

A l'autre extrémité, la partie longiligne se raccorde de façon continue à la tête 13 non cylindrique, le cas échéant avec une section circulaire sur une courte longueur immédiatement sous la tête. Cette longueur correspond à l'épaisseur de la paroi du moyeu.

Les rayons selon la présente invention sont réalisés en un alliage léger à durcissement structural, c'est-à-dire apte au traitement thermique.

Il s'agit par exemple d'un alliage d'aluminium du type 7075, ou de la série 7000, 2000 ou 6000. On peut utiliser par exemple un alliage 7093 avec 17% de B4C, de densité 2,7, et de module élastique 100.000 MPa (Mégapascals), ou bien un alliage 2080 avec 17% de SiC, de densité 2,82. On pourrait utiliser aussi un alliage de titane par exemple un alliage Ti-6Al-4Va, c'est-à-dire avec 6% d'aluminium, et 4% de vanadium. D'autres alliages peuvent aussi convenir.

Dans une première phase de réalisation du rayon, on part d'un fil extrudé de l'alliage dont on réduit progressivement le diamètre au diamètre désiré du rayon. Cette réduction de diamètre qui provoque un écrouissage de la matière peut se faire en plusieurs passes, avec un recuit intermédiaire entre deux passes successives. La dernière passe est suivie d'un recuit.

On a obtenu de bons résultats avec un fil de diamètre 2,7 à 3,15 millimètres. Naturellement ces chiffres n'ont qu'une valeur indicative. Il faut souligner que le diamètre du corps effilé est nettement plus important que pour un rayon en inox traditionnel, mais le poids du rayon en final est plus faible compte tenu de la différence de densité. En effet, à titre d'illustration, la densité varie de 7,8 pour un acier inox à 4,5 pour un alliage de titane et 2,8 pour un alliage d'aluminium. Un diamètre plus important de rayon améliore la rigidité et la résistance du rayon à la torsion. En d'autres termes, le rayon aura moins tendance à se vriller lors de sa mise sous tension par rotation de la vis.

Le fil obtenu après tréfilage et recuit est coupé selon des filaments de longueur déterminée, supérieure à la longueur désirée pour le rayon. Compte tenu de l'état recuit de la matière, on peut réaliser de façon très facile la mise en forme du rayon. En outre, les déformations provoquées par cette mise en forme ne génèrent que des tensions internes réduites, significativement plus faibles que pour un rayon traditionnel en inox.

La mise en forme du rayon consiste à réaliser les deux têtes, et le cas échéant à changer la section de la partie centrale effilée.

Grâce aussi à la malléabilité de la matière, on peut réaliser des têtes de rayon de dimensions et de volume nettement plus élevées que pour un rayon traditionnel. Ces dimensions plus élevées réduisent la concentration des contraintes principalement dans les zones de changement de section, c'est-à-dire sous les têtes. Ceci améliore la durée de vie en fatigue du rayon. En outre, on a des surfaces de contact élargies, d'un côté avec la paroi du moyeu, de l'autre avec la vis évidée. On a donc des pressions de contact plus faibles au moyeu et à la jante.

Egalement, comme cela a été décrit en relation avec les figures 2 et 3, il est possible de mettre en forme la partie centrale effilée du rayon selon des formes plus ou moins complexes, et éventuellement évolutives le long du rayon, en particulier des formes aérodynamiques avec un bord d'attaque et un bord de fuite. Contrairement à cela, les rayons inox actuels sont simplement aplatis.

Ainsi, on met en forme l'une des têtes 2 ou 3 par exemple par une opération de frappe avec un poinçon. La mise en forme de la tête peut être réalisée en plusieurs phases, avec des poinçons différents et des forces de frappe différentes, le cas échéant dans des conditions de température autres que la température ambiante, de façon à avoir une tête de forme désirée, et surtout d'avoir un transfert de section progressif, sans fissure, à la jonction entre le corps effilé du rayon et la tête.

Dans l'opération suivante, on enfile la vis évidée 5 le long de la partie évidée puis on met en forme la seconde tête du rayon.

La vis évidée est réalisée par frappe à froid ou décolletage dans un alliage de même nuance que l'alliage du filament, c'est-à-dire un alliage compatible avec les mêmes traitements thermiques ou autres traitements que le filament recuit.

La seconde tête est mise en forme de préférence dans une matrice, de façon à ajuster simultanément la longueur du rayon à la longueur désirée.

La mise en forme du corps effilé du rayon est réalisée par une opération de matriçage, le cas échéant en plusieurs passes dans des matrices de forme progressive.

Pour maîtriser le mieux possible la longueur finale du rayon, cette opération est réalisée de préférence avant la mise en forme de la seconde tête.

Il faut noter que l'ordre des opérations de mise en forme de l'une et l'autre des deux têtes et d'enfilage de la vis est indifférent, pourvu que la vis soit présente avant la frappe de la seconde tête. On pourrait aussi réaliser deux opérations ou plus de façon simultanée avec un outillage adapté.

Une fois la forme finale atteinte, le rayon avec sa vis de tension est soumis à un traitement thermique qui a pour objet d'augmenter la résistance élastique et la résistance à la fatigue du rayon.

La nature de ce traitement thermique est connue. Plusieurs techniques de traitement peuvent convenir.

Dans le cas d'un rayon en alliage d'aluminium selon un premier mode de traitement connu sous la dénomination 7075, le rayon est mis en solution à 465 degrés Celsius pendant 20 minutes au moins, puis trempé à l'air ou à l'eau. Ensuite le rayon subit un revenu de 12 à 16 heures à 135 degrés Celsius pour aboutir à un état dit T6

Selon un autre traitement connu sous la dénomination T73, le rayon subit après la trempe un premier revenu à 108 degrés Celsius pendant 6 à 8 heures, puis un deuxième revenu à 161 degrés Celsius pendant 24 à 30 heures.

Il est connu que le premier traitement favorise la résistance élastique, le second la résistance à la corrosion sous contrainte. D'autres traitements peuvent aussi convenir selon la nature de l'alliage.

Au cours de la mise en solution, les tensions internes résiduelles disparaissent.

Passé le stade du traitement thermique, le rayon a atteint les propriétés mécaniques souhaitées. Il peut alors ou bien être utilisé tel quel, ou bien subir un traitement complémentaire d'anodisation, dans le cas où il est en alliage d'aluminium.

De façon connue, l'anodisation est un traitement qui durcit la matière en surface. L'anodisation permet aussi de colorer la matière.

Dans ces conditions, les rayons peuvent être anodisés séparément, ce qui permet d'obtenir des colorations de rayons différentes de celle de la jante.

Selon une autre mise en oeuvre de l'invention, comme la jante est en aluminium, et le corps de moyeu également en aluminium, l'ensemble peut être assemblé puis soumis à une anodisation globale, les pièces qui ne sont pas en alliage d'aluminium. notamment les roulements, étant montés ultérieurement.

Dans le cas où le rayon est en alliage de titane, il subit de la même façon un traitement thermique avec une trempe et un revenu. L'anodisation n'est pas nécessaire car l'alliage de titane présente naturellement une bonne résistance à la corrosion. Le rayon peut être coloré au cours du traitement thermique.

Selon un autre mode de fabrication du rayon, on part d'un fil d'alliage que l'on découpe en filaments. Les filaments sont ensuite mis en solution par exemple à 475°C pendant 50 minutes.

On réalise ensuite une trempe à l'eau froide. Le filament est alors dans un état de trempe fraîche, c'est-à-dire qu'il conserve sa malléabilité et qu'il peut être mis en forme au cours d'une période de temps déterminée qui suit la trempe. Cette période de temps dépend de la température de conservation du fil. Elle peut atteindre plusieurs jours si la température est inférieure à 0°.

On pourrait aussi réaliser la découpe du fil en filaments à ce stade. Pour la mise en forme, on opère comme dans le cas précédent, on forme une tête, on enfile la vis évidée puis on forme la seconde tête. Ensuite, on procède à un revenu à 175°C.

Ce mode de fabrication est avantageux car la dernière opération de revenu se déroule à une température relativement basse, elle ne risque pas de provoquer une recrystallisation de l'alliage.

En outre, la vis évidée est traitée à part. Elle peut subir un traitement différent, ou bien être réalisée dans un alliage différent ou une matière différente, par exemple un matériau connu sous le nom de "Zamak" ou encore en laiton, ou en acier. Le rayon peut aussi être anodisé et / ou coloré avant d'être enfilé sur le corps du rayon.

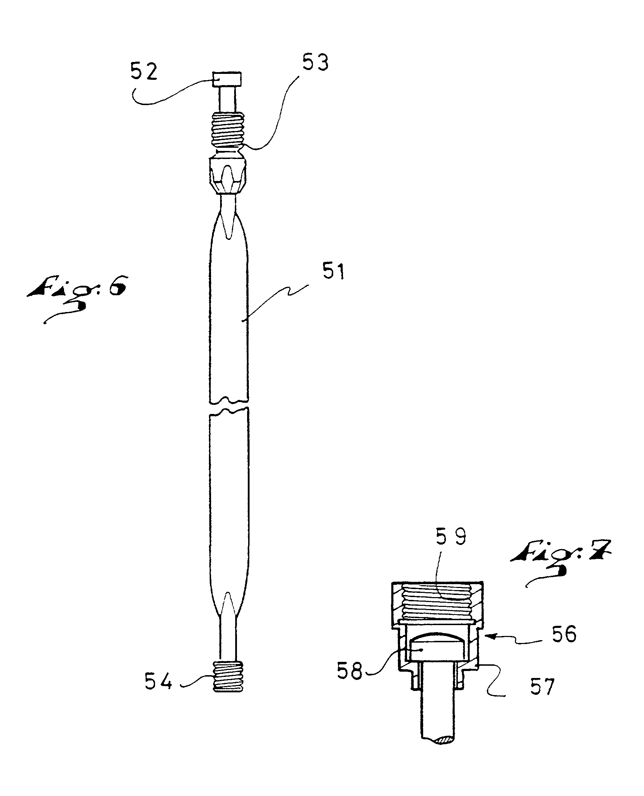

Les figures 4 et 5 montrent de façon schématique le montage d'un rayon selon l'invention sur des moyeux arrière et avant, respectivement.

Comme le rayon présente deux têtes, il n'est pas possible de l'enfiler dans un orifice. La tête opposée à la vis est de ce fait maintenue au niveau d'une encoche. Comme le rayon et en particulier la tête présente des dimensions plus élevées qu'un rayon usuel en inox, les contraintes sont réparties sur une plus grande surface au niveau de l'encoche.

La figure 4 montre un moyeu arrière 16 avec un corps de moyeu 17, un corps de roue libre 18, le tout monté en rotation autour d'un arbre 19. Le corps de roue libre 17 présente vers chaque extrémité un renflement 20, 21. Chaque renflement présente une série de créneaux orientés de façon radiale et parallèlement à la direction axiale de l'arbre 19. Les créneaux 22a, 22b, 22c sont visibles pour le renflement 20, les créneaux 23a, 23b, 23c sont visibles pour le renflement 21.

Chaque créneau présente deux encoches réalisées au diamètre du corps effilé d'un rayon. Les encoches sont prévues pour retenir deux rayons en position tête-bêche, ainsi que cela est schématisé pour les rayons 25 et 26 respectivement engagés dans des encoches 24a, 24b. La tête de rayon retenue par un créneau est de préférence non cylindrique, ainsi que cela a été décrit précédemment. Dans ces conditions, la base de la tête est empêchée de pivoter par la base du créneau ou éventuellement par des petites dents de retenue qui se trouvent au sommet de l'encoche.

Un tel moyeu est réalisé de façon relativement simple. Les créneaux sont en effet réalisés avec l'ébauche du corps de moyeu, et les encoches sont réalisées par tournage en même temps que l'usinage du corps.

Une jante 29 prévue pour être associée au rayon est représentée en coupe dans la figure 4. La jante 29 présente un pont supérieur 30, un pont inférieur 31, et deux flancs latéraux 32, 33 qui se prolongent au-delà du pont supérieur par des ailes d'accrochage du pneu. Le pont supérieur est exempt d'orifices, mis à part l'orifice prévu pour la valve. Pour chaque rayon, le pont inférieur est percé d'un orifice, qui, de préférence est réalisé par refoulement de matière. De cette façon, il se forme une cheminée 35, qui est taraudée aux dimensions de la partie filetée de la vis 36.

La cheminée réalisée au pont inférieur présente l'avantage de ne pas affaiblir la matière au niveau de l'orifice. De plus, le filetage qui permet l'accrochage du rayon et sa mise sous tension est de dimensions bien supérieures à un filetage de rayon traditionnel. A titre d'exemple, on a construit un rayon tel que le rayon 25 avec une vis filetée au pas normalisé M7. Pour un rayon traditionnel, la partie filetée présente un diamètre de 2 millimètres. Les contraintes sont de ce fait beaucoup plus réparties dans le pont inférieur de la jante.

Il faut noter aussi que les rayons sont inclinés par rapport à une direction radiale. Cela tient à leur montage tête-bêche d'une part, et à l'ouverture de la nappe de rayons. Pour tenir compte de cela, les cheminées 35 sont inclinées par rapport au plan radial médian défini par la jante. De plus, comme cela est représenté en figure 4, les rayons présentent un léger coude à proximité du moyeu, pour que l'extrémité du rayon située du côté du moyeu se présente selon une direction parallèle au plan radial médian défini par la jante. On pourrait aussi prévoir une forme de créneau qui permette au rayon de prendre la bonne inclinaison.

La figure 5 montre de façon schématique un rayon 40 assemblé à un moyeu avant 41. Le moyeu 41 présente un corps de moyeu 43 monté rotatif autour d'un arbre 42. De chaque côté le corps de moyeu présente un flasque ouvert vers l'extérieur, respectivement 44, 45, et obturé par une coupelle, respectivement 46, 47. Des encoches sont réalisées à l'ouverture des flasques. L'ouverture des encoches correspond au diamètre du corps effilé du rayon 40. Les encoches 48a, 48b, 48c, 48d et 48e sont visibles pour le flasque 44, les encoches 49a, 49b, 49c, 49d sont visibles pour le flasque 45. Le montage des rayons se fait ici en engageant le corps effilé de chaque rayon dans l'encoche, avec la tête non cylindrique à l'intérieur du flasque. Ensuite la coupelle est mise en place puis les jeux de roulements sont ajustés. De façon avantageuse la tête non cylindrique se cale contre la coupelle et contre une arête du flasque ce qui entrave sa rotation au moment de la mise sous tension du rayon.

Une jante 50 prévue pour coopérer avec le rayon 40 est représentée en figure 5. La jante est semblable à la jante 29 précédemment décrite, sauf en ce qui concerne l'orientation des cheminées. En effet, dans le cas présent, les rayons sont parallèles à des plans d'orientation radiale, si bien que les orifices 35 de la jante tiennent seulement compte de l'inclinaison des rayons due à l'ouverture des nappes de rayons. Il faut noter aussi, que, de préférence, au niveau des encoches, les flasques présentent une surface qui est inclinée de façon orthogonale à la direction prise par les rayons.

Une fois le montage des rayons réalisé sur une roue avant ou arrière, la mise sous tension des rayons et le réglage du voile de la roue se fait selon une technique usuelle.

Avantageusement, les jantes 29 et 50, avec leur pont supérieur exempt d'orifice, peuvent être équipées par ailleurs d'un pneu monté en tubeless, c'est-à-dire sans chambre à air ni fond de jante. Le montage de rayons en alliage léger contribue à réduire encore le poids et l'inertie de la roue finale.

La figure 6 montre un rayon prévu pour un autre mode d'accrochage.

Le rayon comprend comme dans le cas précédent une partie longiligne 51 éventuellement profilée, une première tête 52 et une vis évidée 53.

La seconde tête 54 présente un diamètre supérieur au diamètre initial de la partie longiligne, et elle est filetée. La seconde tête 54 est par exemple mise en forme par une opération de frappe de l'extrémité du fil, de façon à agrandir son diamètre, puis elle est filetée par une opération de roulement, afin d'améliorer sa résistance à la fatigue.

Par exemple partant d'un fil de 2,7 millimètres de diamètre, la tête 54 est filetée avec un diamètre externe de 4,5 millimètres, et elle présente une hauteur de 4 millimètres.

Les opérations de traitement thermique sont les mêmes que dans le cas précédent. La tête 54 est prévue pour être vissée à bloc dans un orifice taraudé du moyeu. Éventuellement, de la colle est ajoutée dans les filets au moment du vissage.

D'autres formes de tête pourraient aussi être adoptées, par exemple des formes avec des oreilles assurant un accrochage quart de tour ou bien avec des ergots pour un accrochage à baïonnette.

Naturellement, la présente description n'est donnée qu'à titre indicatif, et l'on pourrait adopter d'autres mises en oeuvre de l'invention sans pour autant sortir du cadre de celle-ci. En particulier, les rayons selon l'invention pourraient équiper d'autres constructions de moyeu ou de jante que celles qui ont été décrites.

On pourrait aussi réaliser des rayons comprenant deux vis évidées, une à chaque tête de rayon. Dans ce cas, les têtes auraient sensiblement la même forme.

On pourrait aussi utiliser un écrou évidé 56 au lieu d'une vis. Un tel écrou 56 est visible en figure 7. Il comprend une cuvette 57 où la tête 58 du rayon est logée. La cuvette est percée pour le passage de la partie effilée, et à son ouverture elle est taraudée et présente un filet 59. L'écrou est prévu pour être vissé sur une vis ou sur une portion de tige filetée.

En outre, on pourrait réaliser les rayons en d'autres alliages que ceux mentionnés.

## Revendications

1. Procédé de fabrication d'un rayon pour une roue de cycle comprenant les étapes suivantes :
- découper un filament de longueur déterminée d'un fil d'alliage léger à durcissement structural, à l'état recuit,
- enfiler sur le filament une vis évidée (5, 15),
- frapper l'une et l'autre des deux extrémités pour former une tête élargie (2, 3, 12, 13, 52, 54, 58) à chaque extrémité du segment, les têtes (2, 3, 12, 13, 52, 54, 58) délimitant entre elles un corps effilé (1, 11),
- soumettre l'ensemble à un traitement thermique de revenu.

2. Procédé selon la revendication 1, **caractérisé par le fait que** le filament est en alliage d'aluminium.

3. Procédé selon la revendication 1, **caractérisé par le fait qu'**il comprend une étape complémentaire de mise en forme du corps effilé (1, 11) sur une grande partie de sa longueur.

4. Procédé selon la revendication 3, **caractérisé par le fait que** le corps effilé (1, 11) est mis en forme avec un profil aérodynamique présentant un bord d'attaque et un bord de fuite.

5. Procédé selon la revendication 4, **caractérisé par le fait que** le profil aérodynamique est évolutif le long du corps effilé (11).

6. Procédé selon la revendication 1, **caractérisé par le fait que** la vis évidée (5, 15) est réalisée en un alliage de même nuance que l'alliage du fil.

7. Procédé selon la revendication 1, **caractérisé par le fait qu'**il comprend une étape complémentaire de filetage d'une tête.

8. Procédé selon la revendication 7, **caractérisé par le fait qu'**il comprend une étape supplémentaire d'anodisation.

9. Procédé de fabrication d'un rayon pour une roue de cycle selon l'une quelconque des revendications précédentes, **caractérisé par le fait qu'**il comprend les étapes suivantes :
- mise en solution d'un fil ou de filaments d'alliage d'aluminium à 475°C,
- trempe à l'eau froide,
- conservation à l'état de trempe fraîche,
- enfilage de la vis évidée (5, 15),
- mise en forme de l'une et de l'autre des têtes élargies (2, 3, 12, 13, 52, 54, 58).

10. Procédé selon l'une quelconque des revendications 1 à 9, **caractérisé par le fait qu'**au lieu d'une vis évidée on enfile un écrou évidé (56).

11. Procédé de fabrication d'une roue comprenant une jante, un moyeu reliés ensemble par des rayons obtenus selon l'une quelconque des revendications 1 à 7 ou 9, où la jante, les rayons et le corps de moyeu sont réalisés en alliage d'aluminium, **caractérisé par le fait qu'**il comprend une étape d'assemblage des éléments en alliage d'aluminium, et une étape d'anodisation de l'ensemble de ces éléments à l'état assemblé.

12. Roue de cycle comprenant une jante (29, 50), un moyeu (16, 41) reliés par une pluralité de rayons, chaque rayon comprenant un corps effilé (1, 11) et deux extrémités respectivement pour l'accrochage à un moyeu et à une jante, le moyeu et la jante présentant chacun des moyens d'accrochage des extrémités des rayons, **caractérisée par le fait que** chaque rayon est obtenu par le procédé selon l'une quelconque des revendications 1 à 10 précédentes.

13. Rayon métallique pour une roue de cycle comprenant un corps effilé (51) et deux extrémités respectivement pour l'accrochage à un moyeu et à une jante, le corps effilé (51) étant lisse et exempt de filetage sur toute sa longueur, et ayant à chacune de ses extrémités une tête élargie (52, 54, 58), et au moins un embout évidé d'accrochage (53, 56) étant monté en rotation libre entre les deux têtes élargies (52, 54, 58), **caractérisé par le fait que** l'une (54) des têtes est filetée à un diamètre supérieur au diamètre du corps effilé (51) et que le rayon est réalisé en alliage léger à durcissement structural.

14. Rayon scion la revendication 13, **caractérisé par le fait qu'**il est en alliage d'aluminium.

15. Rayon selon la revendication 14, **caractérisé par le fait qu'**il est anodisé.

16. Rayon selon la revendication 13, **caractérisé par le fait qu'**il est en alliage de titane.

17. Rayon selon la revendication 13, **caractérisé par le fait qu'**il présente en section un profil aérodynamique

## Claims

1. , Method for manufacturing a spoke for a cycle wheel including the following steps:
- cutting a filament of predetermined length from a wire of light alloy with structural hardening in the annealed state,
- fitting on the filament a recessed screw (5, 15),
- punching both ends to form an enlarged head (2, 3, 12, 13, 52, 54, 58) at each end of the segment, the heads (2, 3, 12, 13, 52, 54, 58) demarcating between them a threaded body (1, 11),
- subjecting the assembly to a tempering heat treatment.

2. Method according to claim 1, **characterized in that** the filament is made of an aluminum alloy.

3. Method according to claim 1, **characterized in that** it includes a complementary step for shaping the tapered body (1, 11) over a substantial portion of its length.

4. Method according to claim 3, **characterized in that** the tapered body (1, 11) is shaped with an aerodynamic profile having a leading edge and a trailing edge.

5. Method according to claim 4, **characterized in that** the aerodynamic profile changes along the length of the threaded body (11).

6. Method according to claim 1, **characterized in that** the recessed screw (5, 15) is made from an alloy having the same color as the wire alloy.

7. Method according to claim 1, **characterized in that** it has a complementary step for threading a head.

8. Method according to claim 7, **characterized in that** it has an additional step for anodizing.

9. Method for manufacturing a spoke for a cycle wheel according to any of the preceding claims, **characterized in that** it includes the following steps:
- solutionizing a wire or filaments of aluminum alloy at 475°C,
- cold water quenching,
- preserving in the solution-treated state,
- fitting the recessed screw (5, 15),
- shaping both enlarged heads (2, 3, 12, 13, 52, 54, 58).

10. Method according to any of claims 1-9, **characterized in that** one fits a recessed nut (56) instead of a recessed screw.

11. Method for manufacturing a wheel including a rim and a hub connected together by spokes obtained according to any of claims 1-7 or 9, where the rim, the spokes and the hub body are made of an aluminum alloy, **characterized in that** it includes a step for assembling the elements in aluminum alloy, and a step for anodizing all of these elements in the assembled state.

12. Cycle wheel having a rim (29, 50) and a hub (16, 41) connected by a plurality of spokes, each spoke including a tapered body (1, 11) and two ends for the fastening to a hub and a rim, respectively, the hub and the rim each having means for fastening the ends of the spokes, **characterized in that** each spoke is obtained by the method according to any of the preceding claims 1-10.

13. Metal spoke for a cycle wheel including a tapered body (51) and two ends for the fastening to a hub and a rim, respectively, the tapered body (51) being smooth and exempt from threading over all its entire length, and having at each of its ends an enlarged head (52, 54, 58), and at least one recessed fastening end (53, 56) being mounted in free rotation between the two enlarged heads (52, 54, 58), **characterized in that** one (54) of the heads is threaded with a diameter greater than the diameter of the tapered body (51) and that the spoke is obtained from light alloy with structural hardening.

14. Spoke according to claim 13, **characterized in that** it is made of an aluminum alloy.

15. Spoke according to claim 14, **characterized in that** it is anodized,

16. Spoke according to claim 13, **characterized in that** it is made of titanium alloy.

17. Spoke according to claim 13, **characterized in that** it has in cross-section an aerodynamic profile.

## Patentansprüche

1. Herstellungsverfahren einer Speiche für ein Zweiradrad, aufweisend die folgenden Schritte:
- Schneiden eines Drahtstückes von vorbestimmter Länge von einem Draht einer leichten Legierung mit Aushärtung im nachgehärteten Zustand,
- Auffädeln einer ausgehöhlten Schraube (5, 15) auf den Draht,
- Stauchen des einen und des anderen der zwei Enden zum Bilden eines vergrößerten Kopfes (2, 3, 12, 13, 52, 54, 58) an jedem Ende des Segmentes, wobei die Köpfe (2, 3, 12, 13, 52, 54, 58) zwischen sich einen verjüngten Körper (1,11) begrenzen,
- Aussetzen der Gesamtheit einer thermischen Behandlung eines Anlassens.

2. Verfahren nach Anspruch 1, **dadurch gekennzeichnet, dass** der Draht aus einer Aluminiumlegierung besteht.

3. Verfahren nach Anspruch 1, **dadurch gekennzeichnet, dass** es einen zusätzlichen Schritt einer In-Form-Bringung des verjüngten Körpers (1, 11) über einen großen Teil seiner Länge aufweist.

4. Verfahren nach Anspruch 3, **dadurch gekennzeichnet, dass** der verjüngte Körper (1, 11) in Form gebracht wird mit einem aerodynamischen Profil, welches einen Angriffsrand und einen Austrittsrand aufweist.

5. Verfahren nach Anspruch 4, **dadurch gekennzeichnet, dass** das aerodynamische Profil sich fortschreitend entwickelnd entlang dem verjüngten Körper (11) ist.

6. Verfahren nach Anspruch 1, **dadurch gekennzeichnet, dass** die ausgehöhlte Schraube (5, 15) aus einer Legierung einer gleichen Nuance wie die Legierung des Drahtes realisiert ist.

7. Verfahren nach Anspruch 1, **dadurch gekennzeichnet, dass** es einen zusätzlichen Schritt eines mit einem Gewindeversehen eines Kopfes aufweist.

8. Verfahren nach Anspruch 7, **dadurch gekennzeichnet, dass** es einen zusätzlichen Schritt einer Anodisierung aufweist.

9. Herstellungsverfahren einer Speiche für ein Zweiradrad gemäß einem der vorhergehenden Ansprüche, **dadurch gekennzeichnet, dass** es die nachfolgenden Schritte aufweist:
- Einbringen in eine Lösung eines Drahtes oder Drahtstücke einer Aluminiumlegierung bei 475° C,
- Abschrecken in kalten Wasser,
- Beibehalten im frisch abgeschreckten Zustand,
- Auffädeln der ausgehöhlten Schraube (5, 15),
- In-Form-Bringen des einen und des anderen der verbreiterten Köpfe (2, 3, 12, 13, 52, 54, 58).

10. Verfahren gemäß einem der Ansprüche 1 bis 9, **dadurch gekennzeichnet, dass** man anstatt einer ausgehöhlten Schraube eine ausgehöhlte Mutter (56) auffädelt.

11. Herstellungsverfahren eines Rades, welches eine Felge aufweist, eine Radnabe, die zusammen verbunden sind durch Speichen, welche gemäß einem der Ansprüche 1 bis 7 oder 9 erhalten sind, wobei die Felge, die Speichen und der Nabenkörper aus einer Aluminiumlegierung realisiert sind, **dadurch gekennzeichnet, dass** es einen Schritt einer Montage von Elementen aus einer Aluminiumlegierung und einen Schritt einer Anodisierung der Gesamtheit dieser Elemente im montierten Zustand aufweist.

12. Zweiradrad aufweisend eine Felge (29, 50), eine Radnabe (16, 41), welche durch eine Mehrzahl von Speichen verbunden sind, wobei jede Speiche einen verjüngten Körper (1, 11) aufweist und zwei jeweilige Enden zum Einhaken an einer Radnabe und einer Felge, wobei die Radnabe und die Felge jeweils Einhakmittel von den Enden der Speichen aufweisen, **dadurch gekennzeichnet, dass** die Speiche durch ein Verfahren gemäß irgendeinem der vorhergehenden Ansprüche 1 bis 10 erhalten ist.

13. Metallische Speiche für ein Zweiradrad aufweisend einen verjüngten Körper (51) und zwei jeweilige Enden für das Einhaken an einer Radnabe und an einer Felge, wobei der verjüngte Körper (51) glatt ist und ohne Gewinde über seine gesamte Länge vorgesehen ist und an jedem seiner Enden einen verbreiterten Kopf (52, 54, 58) aufweist und mindestens einen ausgehöhlten Ansatz eines Einhakens (53, 56), welcher frei in Drehung zwischen den beiden verbreiterten Köpfen (52, 54, 58) montiert ist, **dadurch gekennzeichnet, dass** der eine der Köpfe (54) mit einem Gewinde versehen ist mit einem Durchmesser größer zu dem Durchmesser des verjüngten Körpers (51), und dass die Speiche aus einer leichten Legierung mit Aushärtung realisiert ist.

14. Speiche nach Anspruch 13, **dadurch gekennzeichnet, dass** es eine Aluminiumlegierung ist.

15. Speiche nach Anspruch 14, **dadurch gekennzeichnet, dass** sie anodisiert ist.

16. Speiche nach Anspruch 13, **dadurch gekennzeichnet, dass** sie aus einer Titanlegierung ist.

17. Speiche nach Anspruch 13, **dadurch gekennzeichnet, dass** sie einen Querschnitt eines aerodynamischen Profils aufweist.
